# EUROPÄISCHE PATENTSCHRIFT

(11) **EP 3 419 845 B1**
(45) Veröffentlichungstag und Bekanntmachung des Hinweises auf die Patenterteilung: **26.06.2019**
(21) Anmeldenummer: 17829648.9
(22) Anmeldetag: 21.12.2017
(51) Int. Cl.: B60J 10/30, B60J 10/70

(54) **KRAFTFAHRZEUGANORDNUNG, VORMONTAGEEINHEIT, PROFILLEISTE UND VERFAHREN ZUR MONTAGE EINER KRAFTFAHRZEUGANORDNUNG**
MOTOR VEHICLE ARRANGEMENT, PRE-ASSEMBLY UNIT, PROFILE STRIP, AND METHOD FOR ASSEMBLY OF A MOTOR VEHICLE ARRANGEMENT
ENSEMBLE DE VÉHICULE AUTOMOBILE, UNITÉ DE PRÉMONTAGE, BAGUETTE PROFILÉE ET PROCÉDÉ DE MONTAGE D'UN ENSEMBLE DE VÉHICULE AUTOMOBILE

(30) Priorität: 22.12.2016 DE 102016125447
(43) Veröffentlichungstag der Anmeldung: 02.01.2019
(73) Patentinhaber: Elkamet Kunststofftechnik GmbH, 35216 Biedenkopf (DE)
(72) Erfinder: BERGMANN, Lutz, 35630 Ehringshausen (DE); BURK, Carsten, 35232 Dautphetal (DE); HAIN, Christoph, 35236 Breidenbach (DE); HAIN, Marco, 35713 Eschenburg (DE); LANDECK, David, 35037 Marburg (DE); LOEHNERT, Jens, 35102 Lohra (DE); ORTMUELLER, Michael, 35232 Dautphetal-Herzhausen (DE); ROTH, Hartmut, 35216 Biedenkopf (DE); SCHNEIDER, Marcus, 35232 Dautphetal (DE)
(74) Vertreter: DREISS Patentanwälte PartG mbB
(86) Internationale Anmeldenummer: PCT/EP2017/084176
(87) Internationale Veröffentlichungsnummer: WO 2018/115329

(56) Entgegenhaltungen:
- WO-A1-01/45974
- DE-A1- 3 518 145
- US-A- 2 456 175
- US-A- 2 497 261

## Beschreibung

Die Erfindung betrifft eine Kraftfahrzeuganordnung mit den Merkmalen des Oberbegriffs des Patentanspruchs 1, gemäß WO 01/45974 A1. Aus der US 2 497 261 A, der US 2 456 175 A und aus der DE 35 18 145 A1 sind weitere Kraftfahrzeuganordnungen bekannt.

Die Erfindung betrifft ferner eine Vormontageeinheit, umfassend eine Baugruppe mit einer Windschutzscheibe und mit einer an einer unteren Berandung der Windschutzscheibe befestigten Profilleiste.

Eine Kraftfahrzeuganordnung und eine Vormontageeinheit sind auch aus der DE 200 08 555 U1 bekannt. Die Vormontageeinheit, die aus der Windschutzscheibe und der daran befestigten Profilleiste besteht, wird üblicherweise extern hergestellt und dann zu dem Hersteller des Kraftfahrzeugs transportiert. Dort wird die Vormontageeinheit am Kraftfahrzeug befestigt, indem die Windschutzscheibe mit der Karosserie des Kraftfahrzeugs verbunden (üblicherweise verklebt) wird.

Im Rahmen der vorliegenden Erfindung ist mit der unteren Berandung der Windschutzscheibe diejenige Berandung gemeint, die nach Einbau an einem Kraftfahrzeug am weitesten unten angeordnet ist. An diese Berandung schließt sich bei einem Kraftfahrzeug ein vorderer Bereich des Kraftfahrzeugs an, der in der Patentliteratur auch mit dem Begriff "Wasserkasten" beschrieben wird, weil in diesen Bereich hinein Wasser von der Windschutzscheibe ablaufen kann. Dieser Bereich des Wasserkastens ist üblicherweise nicht einfach offen, sondern mittels einer Abdeckung abgedeckt. Diese Abdeckung wird in der Patentliteratur auch mit dem Begriff "Wasserkastenabdeckung" beschrieben. Im Rahmen der vorliegenden Erfindung soll aber jegliches Abdeckbauteil gemeint sein, das einen vor dem unteren Bereich der Windschutzscheibe vorgesehenen Bereich des Kraftfahrzeugs abdeckt, unabhängig davon, ob dieser Bereich tatsächlich einen "echten" Wasserkasten zur Aufnahme von Wasser aufweist oder nicht.

Die aus der DE 200 08 555 U1 bekannte Profilleiste weist einen an die untere Berandung der Windschutzscheibe angrenzenden Dichtungsabschnitt und eine bei Einbau am Kraftfahrzeug nach oben offene Rastnut auf, welche parallel zu der unteren Berandung der Windschutzscheibe verläuft. Diese Rastnut dient zum Einstecken und Verrasten eines Halteabschnitts des Abdeckbauteils. Im montierten Zustand des Abdeckbauteils ergibt sich ein Übergangsbereich, in welchem Außenflächen der Windschutzscheibe, des Dichtungsabschnitts und des Abdeckbauteils möglichst flächig zueinander benachbart angeordnet sind, um eine optisch gefällige, verschmutzungsunanfällige und aerodynamisch günstige Anordnung zu schaffen. Prinzipiell ist es gewünscht, diese Vorteile einer aus der DE 200 08 555 U1 bekannten Kraftfahrzeuganordnung beizubehalten.

Aus der EP 2 253 556 A1 ist eine ähnliche Profilleiste bekannt. Die EP 2 253 556 A1 schlägt vor, die Profilleiste einer Vormontageeinheit der vorstehend beschriebenen Art vor Transportschäden zu schützen, die durch eine Verformung oder Beschädigung der Rastnut der Profilleiste entstehen. Zu diesem Zweck wird ein sogenannter Keder in die Rastnut der Profilleiste eingebracht, der die Rastnut während des Transports der Vormontageeinheit ausfüllt und als Ausstützung dient. Zur Montage der Vormontageeinheit an einem Kraftfahrzeug muss der Keder dann aber zunächst wieder aus der Rastnut entfernt werden, damit das Abdeckbauteil mit der Rastnut der Profilleiste verrastet werden kann. Das Entfernen des Keders aus der Rastnut ist relativ umständlich und kann durch zusätzliche Griffhilfen o.ä. vereinfacht werden, wodurch sich die Vormontageeinheit aber verteuert.

Ausgehend von der WO 01/45974 A1 liegt der vorliegenden Erfindung die Aufgabe zugrunde, eine Kraftfahrzeuganordnung, eine Vormontageeinheit und Verfahren zur Montage einer Kraftfahrzeuganordnung anzugeben, mit welchen zumindest Teile der vorstehend diskutierten Probleme vermieden werden können.

Bei einer Kraftfahrzeuganordnung der eingangs genannten Art wird die vorstehend genannte Aufgabe erfindungsgemäß durch die kennzeichnenden Merkmale des Patentanspruchs 1 gelöst. Erfindungsgemäß stellt ein zu der Windschutzscheibe und der Profilleiste separat bereitgestelltes Zusatzbauteil einen ersten Befestigungsabschnitt bereit. Die an der Windschutzscheibe befestigte Profilleiste stellt erfindungsgemäß einen zweiten Befestigungsabschnitt bereit. Das Zusatzbauteil ist Teil der Kraftfahrzeugkarosserie oder mit der Kraftfahrzeugkarosserie verbunden. Die beiden Befestigungsabschnitte begrenzen einen Zwischenraum, in welchen hinein ein Halteabschnitt des Abdeckbauteils einführbar ist. Der Halteabschnitt ist nach Einfügung zwischen die Befestigungsabschnitte zwischen den Befestigungsabschnitten angeordnet und dort befestigbar oder befestigt.

Die erfindungsgemäße Kraftfahrzeuganordnung ermöglicht es, die grundsätzlichen Vorteile einer vorbekannten Rastnutanordnung beizubehalten. Allerdings ist nunmehr bei der Profilleiste keine Rastnut mehr vorgesehen, die während eines Transports einer Vormontageeinheit vor einer Verformung geschützt werden müsste. Vielmehr übernehmen zwei unterschiedliche Bauteile, nämlich zum einen der Befestigungsabschnitt der Profilleiste und zum anderen der Befestigungsabschnitt des Zusatzbauteils die Aufgabe, einen Zwischenraum zur Einführung des Halteabschnitts des Abdeckbauteils zu definieren.

Ausgehend von einem Zustand eines Kraftfahrzeugs, an welchem eine Windschutzscheibe bereits an einer Karosserie des Kraftfahrzeugs montiert ist, genügt es für den Fall, dass das Zusatzbauteil durch einen Teil der Kraftfahrzeugkarosserie bereitgestellt wird, das Abdeckbauteil mit dem Befestigungsabschnitt des Zusatzbauteils und mit dem Befestigungsabschnitt der Profilleiste zu fügen, indem der Halteabschnitt des Abdeckbauteils in den zwischen den Befestigungsabschnitten ausgebildeten Zwischenraum eingeführt wird. Dies bedeutet für einen Monteur keine Umstellung im Vergleich zu der Montage eines Abdeckbauteils an einer Profilleiste, welche eine herkömmliche Rastnut aufweist (vergleiche beispielsweise DE 200 08 555 U1).

Für den Fall, dass das Zusatzbauteil von der Kraftfahrzeugkarosserie separat bereitgestellt ist, genügt ein einfacher Vormontageschritt, nämlich die Positionierung und Befestigung des Zusatzbauteils an der Kraftfahrzeugkarosserie derart, dass ein Befestigungsabschnitt des Zusatzbauteils zu dem Befestigungsabschnitt der Profilleiste beabstandet angeordnet ist, damit ein Halteabschnitt in den Zwischenraum zwischen den Befestigungsabschnitten eingeführt werden kann.

Für eine besonders einfache Montage der Kraftfahrzeuganordnung ist bevorzugt, wenn der Halteabschnitt des Abdeckbauteils stegförmig ausgebildet ist. Ein solcher Steg kann einstückig mit dem Abdeckbauteil ausgebildet sein oder aber separat zu einem Abdeckabschnitt des Abdeckbauteils bereitgestellt sein und dann mit diesem verbunden werden, insbesondere durch Verrasten, Verschrauben oder Verkleben.

Erfindungsgemäß sind die Befestigungsabschnitte und der Halteabschnitt zu der Außenfläche des Kraftfahrzeugs geneigt oder senkrecht orientiert, derart, dass eine Fügerichtung zum Fügen des Halteabschnitts und der Befestigungsabschnitte zu der Außenfläche geneigt oder senkrecht orientiert ist. Auf diese Weise kann das Abdeckbauteil "von oben her" dem sich an die Windschutzscheibe nach unten anschließenden Bereich des Kraftfahrzeugs zugeführt werden und der Halteabschnitt in den Zwischenraum eingeführt werden, der von den jeweiligen Befestigungsabschnitten der Profilleiste und des Zusatzbauteils begrenzt ist. Auf diese Weise können Montageabläufe, die sich für eine Serienfertigung bewährt haben, beibehalten werden.

Für eine Verbindung zwischen dem Halteabschnitt und den Befestigungsabschnitten können reibschlüssig und/oder formschlüssig miteinander zusammenwirkende Verbindungsabschnitte vorgesehen sein. Vorzugsweise ist die Verbindung zwischen dem Halteabschnitt und den Befestigungsabschnitten zerstörungsfrei lösbar. Daher ist eine bevorzugte Verbindung zwischen dem Abdeckbauteil und den Befestigungsabschnitten eine Rastverbindung.

Es ist bevorzugt, dass zumindest einer der Befestigungsabschnitte und der Halteabschnitt Rastbereiche oder Rastelemente aufweisen, mittels welchen der Halteabschnitt und der zumindest eine Befestigungsabschnitt miteinander verrastet sind. Eine solche Rastverbindung bietet auch den Vorteil einer definierten Einbaulage des Abdeckbauteils relativ zu den Befestigungsabschnitten. Ferner hat eine Rastverbindung den Vorteil, dass die Erreichung eines Rastzustands mit einer haptischen und/oder akustischen Rückmeldung einhergeht.

Bei einer bevorzugten Ausführungsform der Erfindung ist vorgesehen, dass die Profilleiste und/oder das Zusatzbauteil mindestens einen Stützabschnitt aufweist oder aufweisen, mittels welchem oder welchen die Profilleiste und das Zusatzbauteil in einer zu der Außenfläche parallelen Richtung relativ zueinander abgestützt sind. Der Stützabschnitt wirkt also als Abstandshalter zwischen Profilleiste und Zusatzbauteil und definiert einen durch die Länge des Stützabschnitts vorgegebenen Abstand zwischen den Befestigungsabschnitten der Profilleiste und des Zusatzbauteils.

Ferner ist es bevorzugt, wenn die Profilleiste mindestens einen Auflageabschnitt zur Auflage auf der Kraftfahrzeugkarosserie und/oder auf dem Zusatzbauteil aufweist. Ein solcher Auflageabschnitt ermöglicht es, die Profilleiste und die mit der Profilleiste verbundene Windschutzscheibe nach unten hin abzustützen. Auf diese Weise kann die Windschutzscheibe nach unten hin abgestützt werden, was insbesondere während der vorstehend beschriebenen Montage eines Abdeckbauteils "von oben her" vorteilhaft ist, da ein Ausweichen der Profilleiste nach unten hin vermieden wird. Ferner kann verhindert werden, dass die untere Berandung der Windschutzscheibe während des Fügevorgangs des Abdeckbauteils nach unten hin ausweicht bzw. eine Klebeverbindung zwischen der Windschutzscheibe und der Windschutzscheibenaufnahme der Karosserie zu stark komprimiert wird.

Bei dem Zusatzbauteil kann es sich um eine Traverse der Kraftfahrzeugkarosserie handeln, also um ein Bauteil, welches sich über die Breite der Kraftfahrzeugkarosserie erstreckt, vorzugsweise im Wesentlichen horizontal und im Wesentlichen parallel zu der unteren Berandung der Windschutzscheibe. Hierbei ist es möglich, bereits an der Traverse vorhandene Abschnitte (beispielsweise Kanten oder Aussparungen oder abgewinkelte Materialabschnitte) als Zusatzbauteil zu nutzen oder aber vorbekannte Traversen so zu modifizieren, dass sie zumindest einen Befestigungsabschnitt aufweisen, der mit dem Halteabschnitt des Abdeckbauteils zusammenwirkt.

Alternativ hierzu ist es möglich, dass das Zusatzbauteil separat von der Kraftfahrzeugkarosserie bereitgestellt ist und beispielsweise an der Traverse der Kraftfahrzeugkarosserie befestigt ist. Für ein separat bereitgestelltes Zusatzbauteil kann es vorteilhaft sein, dieses mittels einer Reibschlussverbindung, Formschlussverbindung, einer Schraubverbindung, einer Klebeverbindung und/oder einer Schweißverbindung mit der Kraftfahrzeugkarosserie zu verbinden.

Es kann vorteilhaft sein, dass die Verbindung zwischen dem Zusatzbauteil und der Kraftfahrzeugkarosserie derart ausgestaltet ist, dass eine genaue Relativposition zwischen dem Zusatzbauteil und der Kraftfahrzeugkarosserie vorgegeben ist, beispielsweise indem ein an dem Zusatzbauteil ausgebildeter Vorsprung mit einer komplementär ausgebildeten Aussparung der Kraftfahrzeugkarosserie versteckt wird.

Es kann aber auch vorteilhaft sein, dass die Verbindung zwischen Zusatzbauteil und Kraftfahrzeugkarosserie derart ausgestaltet ist, dass eine Relativposition zwischen Zusatzbauteil und Kraftfahrzeugkarosserie einstellbar ist, insbesondere ein Abstand zwischen dem Befestigungsabschnitt des Zusatzbauteils und dem Befestigungsabschnitt der Profilleiste. Eine solche Einstellbarkeit kann beispielsweise durch eine Steckverbindung mit einem Einsteckabschnitt und einem Langloch bereitgestellt werden, wobei eine anschließende Fixierung der Bauteile beispielsweise mittels einer Schraub- oder Klebeverbindung erfolgt.

Die Erfindung betrifft ferner ein Verfahren zur Montage einer vorstehend beschriebenen Kraftfahrzeuganordnung, bei welchem zunächst der erste Befestigungsabschnitt des Zusatzbauteils und der zweite Befestigungsabschnitt der Profilleiste innerhalb einer sich parallel zu der Außenfläche erstreckenden Ebene relativ zueinander positioniert werden, insbesondere der Abstand zwischen den Befestigungsabschnitten eingestellt wird, und bei welchem dann der Halteabschnitt des Abdeckbauteils in der zu der Außenfläche geneigten oder senkrechten Fügerichtung zwischen die Befestigungsabschnitte eingeführt und befestigt wird.

Das erfindungsgemäße Verfahren zeichnet sich dadurch aus, dass zunächst ein Befestigungsbereich bereitgestellt wird, der in Fahrtrichtung des Kraftfahrzeugs gesehen auf seiner Rückseite von dem Befestigungsabschnitt der Profilleiste und auf seiner Vorderseite von dem Befestigungsabschnitt des Zusatzelements begrenzt wird. Auf diese Weise entsteht ein von oben/außen sichtbarer Spalt, der sich quer zu einer Fahrzeuglängsrichtung erstreckt und der in einer zu der Außenfläche des Kraftfahrzeugs geneigten oder senkrechten Richtung offen ist. In diesen Spalt hinein wird mit einer zu der Außenfläche geneigten oder senkrechten Fügerichtung der Halteabschnitt des Abdeckbauteils eingeführt und befestigt. Auf diese Weise kann ein einfaches und zuverlässiges Montageverfahren bereitgestellt werden.

Bei einer Vormontageeinheit der eingangs genannten Art wird die vorstehend genannte Aufgabe erfindungsgemäß dadurch gelöst, dass die Profilleiste ein von einem Hauptkörper stegförmig abragendes, lippenförmiges Rastelement aufweist, das einen zu einer Unterkante der unteren Berandung der Windschutzscheibe maximal beabstandeten Oberflächenabschnitt der Profilleiste bildet.

Wie vorstehend erörtert, ermöglicht es die erfindungsgemäße Kraftfahrzeuganordnung, auf eine an der Profilleiste ausgebildete Rastnut zu verzichten. Es ist aber vorteilhaft, wenn - in Abwesenheit einer an der Profilleiste ausgebildeten Rastnut - an der Profilleiste ein von einem Hauptkörper der Profilleiste stegförmig abragendes, lippenförmiges Rastelement vorgesehen ist, welches zur Verbindung mit einem Rastbereich des Halteabschnitts des Abdeckbauteils verwendet werden kann. Das genannte Rastelement bildet einen zu der Unterkante der unteren Berandung der Windschutzscheibe maximal beabstandeten Oberflächenabschnitt der an der Windschutzscheibe befestigten Profilleiste. Gleichzeitig bildet das genannt Rastelement einen zu einer Rückseite des Hauptkörpers, der zur Anlage an der Unterkante der unteren Berandung der Windschutzscheibe dient, maximal beabstandeten Oberflächenabschnitt. Dies bedeutet, dass in einer zu der Außenfläche der Windschutzscheibe parallelen Richtung gesehen ein maximal von der Unterkante der unteren Berandung der Windschutzscheibe und von der Rückseite des Hauptkörpers beabstandeter Bereich der Profilleiste von dem genannten lippenförmigen Rastelement ausgebildet wird. Dieses Rastelement bildet bei einer vorstehend beschriebenen Kraftfahrzeuganordnung den Befestigungsabschnitt der Profilleiste und ermöglicht eine zuverlässige Fixierung des Halteabschnitts des Abdeckbauteils.

Für den Transport einer vorstehend beschriebenen Vormontageeinheit ist erfindungsgemäß vorgesehen, dass die Profilleiste und/oder die Windschutzscheibe mit einem Schutzelement lösbar verbunden ist oder sind, das in seinem mit der Profilleiste und/oder der Windschutzscheibe verbundenen Zustand eine der unteren Berandung der Windschutzscheibe abgewandte Aufstandsfläche aufweist, die einen größeren Abstand zu der unteren Berandung der Windschutzscheibe aufweist als der zu der Unterkante der unteren Berandung der Windschutzscheibe maximal beabstandete Oberflächenabschnitt der Profilleiste. Aus Sicht der Windschutzscheibe ist die Aufstandsfläche des Schutzelements also weiter von der unteren Berandung der Windschutzscheibe entfernt als jeder Materialabschnitt der Profilleiste inklusive des gesamten Rastelements. Dies ermöglicht es, die Vormontageeinheit in vertikaler Ausrichtung transportieren zu können, wobei die Vormontageeinheit mittels der Aufstandsfläche des Schutzelements auf einer Lager- oder Transportfläche aufgestellt ist und alle Materialabschnitte der Profilleiste von der Lager- oder Transportfläche beabstandet sind. Dies ermöglicht einen platzsparenden und schonenden Transport der Vormontageeinheit.

Für die Ausgestaltung der lösbaren Verbindung zwischen dem Schutzelement einerseits und der Profilleiste und/oder der Windschutzscheibe andererseits kann es vorteilhaft sein, eine Rastverbindung vorzusehen oder aber eine Solltrennstelle, die zwischen dem Schutzelement und der Profilleiste vorgesehen ist. Mit anderen Worten: Das Schutzelement kann als separates Bauteil bereitgestellt werden, oder aber das Schutzelement wird an der Profilleiste einstückig vorgehalten und vor der Montage an einem Kraftfahrzeug entfernt.

Bei einer weiteren vorteilhaften Ausgestaltung der Profilleiste ist der Hauptkörper insbesondere massiv ausgebildet und weist eine Stirnfläche auf, die den zu der Rückseite des Hauptkörpers bzw. den zu der Unterkante der unteren Berandung der Windschutzscheibe maximal beabstandeten Oberflächenabschnitt bildet und einen von der Stirnfläche ausgehend in Richtung auf die Rückseite des Hauptkörpers bzw. Unterkante der Windschutzscheibe rückversetzten zweiten Befestigungsabschnitt aufweist, insbesondere in Form eines Rastbereichs. Eine solche Profilleiste ist besonders robust und weist eine Stirnfläche auf, die bei einem stehenden Transport einer Windschutzscheibe eine Aufstandsfläche bildet. Diese Profilleiste eignet sich gut für eine Verrastung mit einem Abdeckbauteil, das ein insbesondere stegförmiges, lippenförmiges Rastelement trägt.

Die Erfindung betrifft ferner ein Verfahren zur Montage einer vorstehend beschriebenen Kraftfahrzeuganordnung unter Verwendung einer vorstehend beschriebenen Vormontageeinheit, bei welchem zur Positionierung der Baugruppe relativ zu dem Zusatzelement eine Anlagefläche des Schutzelements in Anlage mit einer Gegenfläche des Zusatzelements gebracht wird und bei welchem das Schutzelement von der Vormontageeinheit entfernt wird und das Abdeckbauteil montiert wird.

Das vorstehend genannte Verfahren hat den Vorteil, dass das Schutzelement nicht nur zum Schutz der Profilleiste während des Transports einer Vormontageeinheit dient, sondern auch als Montagehilfe zur Relativpositionierung der Baugruppe der Vormontageeinheit und des Zusatzbauteils. Dabei ist es möglich, dass während der Relativpositionierung von Baugruppe und Zusatzbauteil, also während der Anlage der Anlagefläche des Schutzelements an der Gegenfläche des Zusatzelements, das Schutzelement in bezogen auf den Transportzustand der Vormontageeinheit unveränderter Lage an der Vormontageeinheit verbleibt. Es ist aber auch möglich, dass das Schutzelement in unterschiedlichen Lagen an der Profilleiste und/oder der Windschutzscheibe befestigbar ist, wobei eine der Lagen eine Transportlage zum Schutz der Profilleiste ist und die andere Lage eine Montagelage zur Einstellung eines Abstands zwischen der Vormontageeinheit und dem Zusatzbauteil ist.

Dementsprechend ist es vorteilhaft, wenn die Anlagefläche des Schutzelements entweder durch dessen Aufstandsfläche oder aber durch eine von der Aufstandsfläche separate Zusatzfläche des Schutzelements gebildet ist.

Die Gegenfläche des Zusatzelements kann durch den Befestigungsabschnitt selbst oder aber durch eine von dem Befestigungsabschnitt separate Zusatzfläche des Zusatzelements gebildet sein.

Weitere Merkmale und Vorteile der Erfindung sind Gegenstand der nachfolgenden Beschreibung und der zeichnerischen Darstellung bevorzugter Ausführungsbeispiele.

In den Zeichnungen zeigen:
- Fig. 1: eine Seitenansicht des Querschnitts einer ersten Ausführungsform einer Kraftfahrzeuganordnung, mit einem Zusatzbauteil, das Teil einer Kraftfahrzeugkarosserie ist und einen reibschlüssig wirkenden Befestigungsabschnitt aufweist;
- Fig. 2: eine Seitenansicht des Querschnitts einer weiteren Ausführungsform einer Kraftfahrzeuganordnung, mit einem Zusatzbauteil vorgesehen ist, das mit einer Kraftfahrzeugkarosserie verbunden ist;
- Fig. 3: eine Seitenansicht des Querschnitts einer weiteren Ausführungsform einer Kraftfahrzeuganordnung, mit einer Profilleiste, die einen Stützabschnitt und einen Auflageabschnitt aufweist;
- Fig. 4: eine Seitenansicht des Querschnitts einer weiteren Ausführungsform einer Kraftfahrzeuganordnung, mit einem Zusatzbauteil, das einen Stützabschnitt aufweist;
- Fig. 5 und: 6 Seitenansichten des Querschnitts weiterer Ausführungsformen einer Kraftfahrzeuganordnung, mit einem Zusatzbauteil mit einem formschlüssig wirkenden Befestigungsabschnitt;
- Fig. 7: eine Seitenansicht des Querschnitts einer Ausführungsform einer Vormontageeinheit;
- Fig. 8: eine Seitenansicht des Querschnitts einer weiteren Ausführungsform einer Vormontageeinheit;
- Fig. 9: eine Seitenansicht des Querschnitts einer weiteren Ausführungsform einer Vormontageeinheit;
- Fig. 10: eine Seitenansicht des Querschnitts der Vormontageeinheit gemäß Fig. 9 und eines Zusatzbauteils;
- Fig. 11 und 12: Seitenansichten des Querschnitts weiterer Ausführungsformen einer Kraftfahrzeuganordnung, mit einem an einem Halteabschnitt eines Abdeckbauteils angeordneten Rastelement; und
- Fig. 13: eine Seitenansicht des Querschnitts einer weiteren Ausführungsform einer Kraftfahrzeuganordnung, mit einem Abdeckbauteil, das einen mit einem Abdeckabschnitt verrasteten Halteabschnitt aufweist.

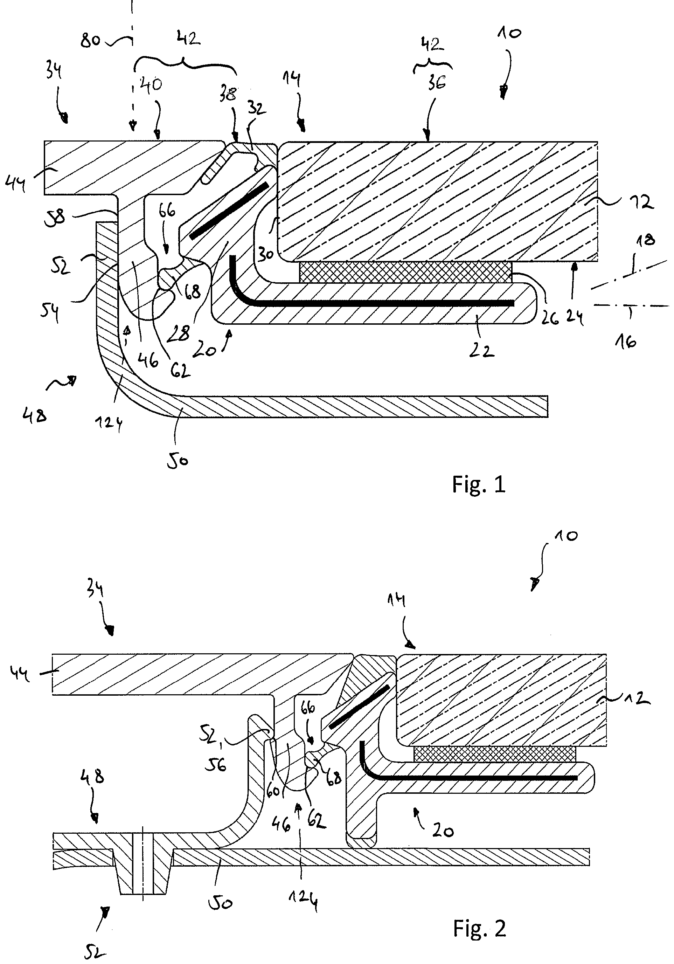

Eine erste Ausführungsform einer Kraftfahrzeuganordnung ist in Figur 1 dargestellt und dort insgesamt mit dem Bezugszeichen 10 bezeichnet. Diese umfasst eine Windschutzscheibe 12, die in der Zeichnung nur abschnittsweise dargestellt ist, nämlich im Bereich einer unteren Berandung 14 der Windschutzscheibe 12.

In der Zeichnung sind die Kraftfahrzeuganordnungen 10 im Wesentlichen in einer horizontalen Lage dargestellt, entsprechend einer strichpunktierten Linie 16, vergleiche Figur 1. Bei Anordnung an einem Kraftfahrzeug erstrecken sich die Bauteile jedoch hierzu geneigt, in Entsprechung einer strichpunktierten Linie 18, vergleiche Figur 1. Dementsprechend bildet das in der Zeichnung jeweils linke Ende der Windschutzscheibe 10 eine untere, in Fahrtrichtung vordere Berandung der Windschutzscheibe 12.

Die Anordnung 10 umfasst ferner eine Profilleiste 20, welche insbesondere aus einem elastischen Kunststoffmaterial hergestellt ist und in an sich bekannter Weise einen Verbindungsabschnitt 22 zur Verbindung mit einer Unterseite 24 der Windschutzscheibe 12 aufweist, insbesondere unter Verwendung einer Verklebung 26.

Der Verbindungsabschnitt 22 erstreckt sich ausgehend von einem Hauptkörper 28 der Profilleiste 20, der benachbart zu einer Unterkante 30 der Windschutzscheibe 14 angeordnet ist und zur Anordnung eines Dichtungsabschnitts 32 dient.

Die Anordnung 10 umfasst ferner ein abschnittsweise dargestelltes Abdeckbauteil 34, das an die Windschutzscheibe 12 angrenzt, und zwar unter Zwischenschaltung des Dichtungsabschnitts 32, derart, dass Außenflächen 36, 38 und 40 der Windschutzscheibe 12 beziehungsweise des Dichtungsabschnitts 32 beziehungsweise des Abdeckbauteils 34 gemeinsam eine kontinuierliche Außenfläche 42 des Kraftfahrzeugs bilden.

Die Außenseite 40 des Abdeckbauteils 34 wird gebildet durch einen Abdeckabschnitt 44, der beispielsweise einstückig mit einem stegförmigen Halteabschnitt 46 ausgebildet ist, der von dem Abdeckabschnitt 44 abragt.

Bei einer in der Zeichnung nicht dargestellten, alternativen Ausführungsform ist der Dichtungsabschnitt 32 an dem der Windschutzscheibe 12 zugewandten Ende des Abdeckabschnitts 44 vorgesehen und nicht an der Profilleiste 20.

Die Anordnung 10 umfasst ferner ein Zusatzbauteil 48. Dieses ist entweder integraler Bestandteil einer Kraftfahrzeugkarosserie 50 (vergleiche Figuren 1, 5, 6, 8 oder 10) oder das Zusatzbauteil 48 ist separat zu einer Kraftfahrzeugkarosserie 50 bereitgestellt und mit dieser verbunden, beispielsweise mittels einer Steckverbindung 52 (vergleiche Figuren 2, 3, 4, 11, 12 und 13). Das Zusatzbauteil 48 wird insbesondere durch eine Traverse der Kraftfahrzeugkarosserie gebildet; oder aber das Zusatzbauteil 48 wird insbesondere an einer Traverse der Kraftfahrzeugkarosserie 50 befestigt.

Zur Befestigung des Abdeckbauteils 34 weist das Zusatzbauteil 48 einen ersten Befestigungsabschnitt 52 auf, der im einfachsten Fall eine Reibfläche 54 aufweist (vergleiche Figuren 1, 8 und 10) und/oder beispielsweise ein Rastelement 56 aufweist (vergleiche Figuren 2, 3, 4, 5, 6, 11, 12 und 13).

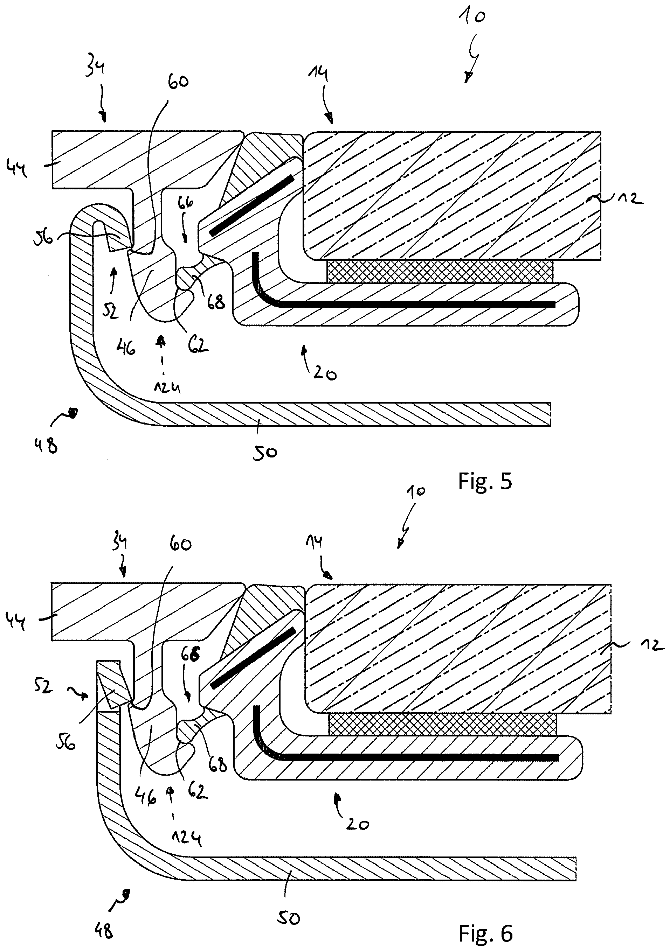

Das Rastelement 56 kann in Form eines verdickten Randbereichs ausgebildet sein (vergleiche Figuren 2, 3, 4, 11, 12 und 13). Das Rastelement 56 kann auch durch einen umgebogenen oder umgeformten Randbereich gebildet sein (vergleiche Figur 5), und/oder durch einen abgewinkelten Materialbereich (vergleiche Figur 6).

Der stegförmige Halteabschnitt 46 des Abdeckbauteils 34 weist im einfachsten Fall eine einfache Reibfläche 58 zur reibschlüssigen Anlage an eine Reibfläche 54 des Zusatzbauteils 48 auf (vergleiche Figur 1). Der Halteabschnitt 46 kann auch einen zu dem Rastelement 56 des Zusatzelements 48 komplementären Rastbereich 60 aufweisen (vergleiche Figuren 2, 3, 4, 5, 6, 11, 12 und 13).

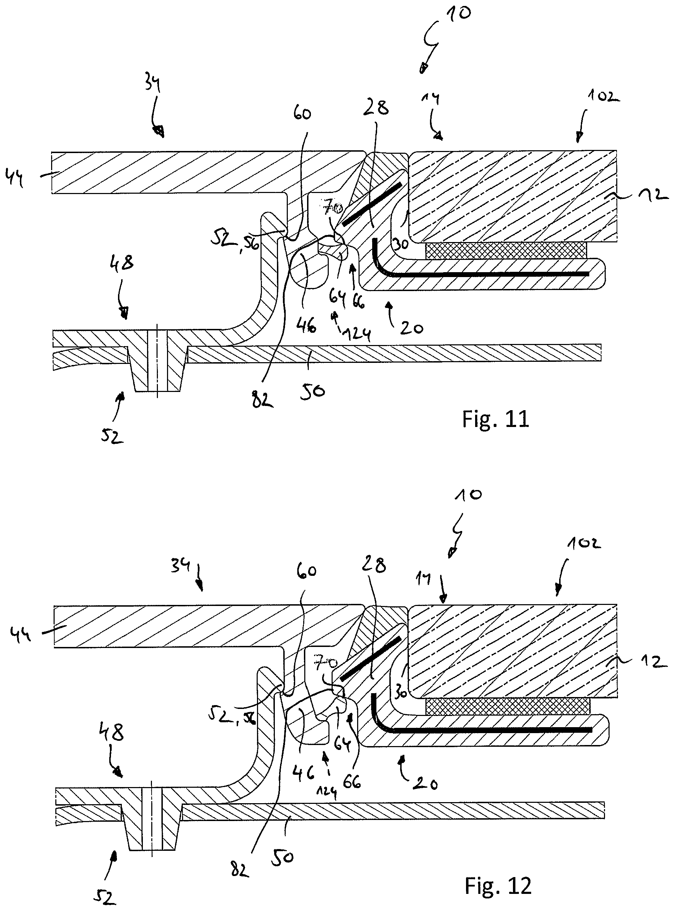

Der Halteabschnitt 46 weist auf seiner im gefügten Zustand der Profilleiste 20 zugewandten Seite entsprechende Rastbereiche 62 auf (vergleiche Figuren 1 bis 6), oder aber ein an dem Halteabschnitt angelenktes, lippenförmiges Rastelement 64 (vergleiche Figuren 11 bis 13).

Ein Rastbereich 62 oder ein Rastelement 64 des Halteabschnitts 46 wirkt auf seiner der Profilleiste 20 zugewandten Seite mit einem zweiten Befestigungsabschnitt 66 zusammen, der beispielsweise durch ein von dem Hauptkörper 28 der Profilleiste 20 stegförmig abragendes, lippenförmiges Rastelement 68 gebildet ist (vergleiche Figuren 1 bis 10).

Der zweite Befestigungsabschnitt 66 kann auch durch einen hinterschnittenen Rastbereich 70 des Hauptkörpers 28 der Profilleiste 20 gebildet sein (vergleiche Figuren 11 bis 13) .

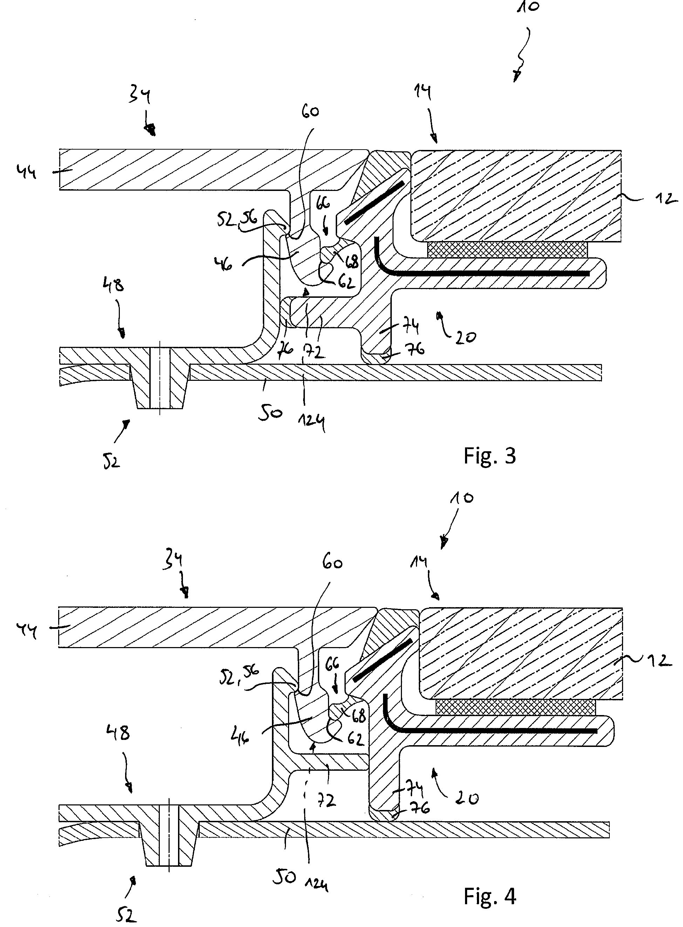

Zur Einstellung eines Abstands zwischen dem ersten Befestigungsabschnitt 52 des Zusatzbauteils 48 und dem zweiten Befestigungsabschnitt 66 des Profilteils 20 ist es möglich, Stützabschnitte 72 vorzusehen, die vorzugsweise einstückig mit der Profilleiste 20 (vergleiche Figur 3), oder mit dem Zusatzbauteil 48 (vergleiche Figur 4) ausgebildet sind.

Alternativ oder zusätzlich zu Stützabschnitten 72 kann die Profilleiste 20 einen Auflageabschnitt 74 zur Auflage auf einem Teil der Kraftfahrzeugkarosserie 50 aufweisen (vergleiche Figuren 3 und 4).

Die Stützabschnitte 72 und/oder die Auflageabschnitte 74 können im Bereich ihrer freien Enden einen Polsterabschnitt 76 aus Weichmaterial aufweisen.

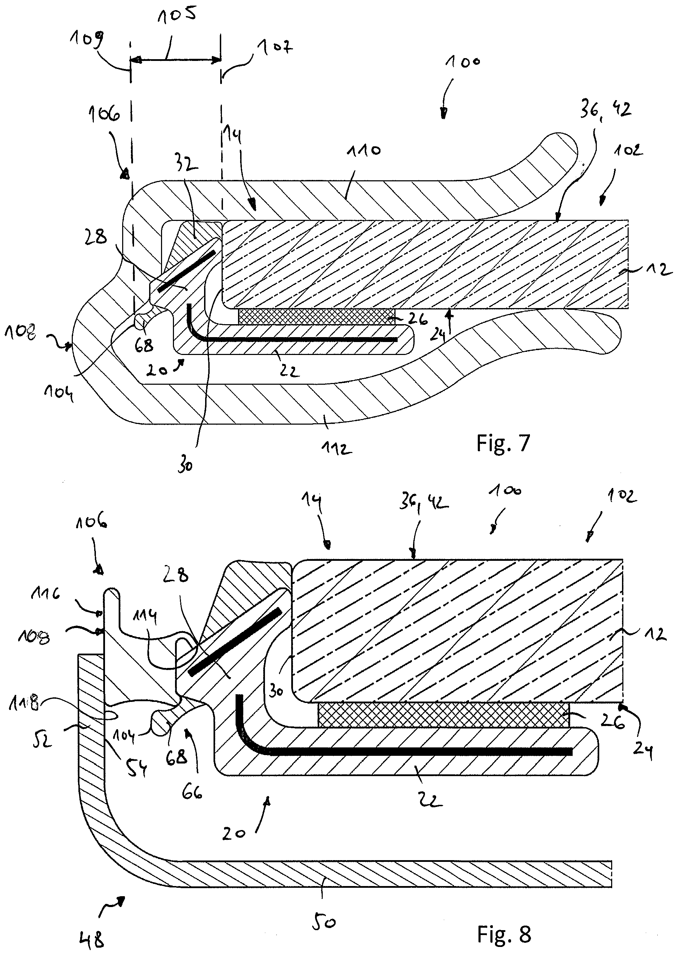

Zur Herstellung von Kraftfahrzeuganordnungen der in den Figuren 1 bis 6 dargestellten Art können in den Figuren 7 bis 10 dargestellte Vormontageeinheiten 100 verwendet werden. Diese weisen eine Baugruppe 102 auf, welche die Windschutzscheibe 12 und eine daran befestigte Profilleiste 20 umfasst. Die Profilleisten 20 dieser Baugruppe 102 weisen ein von dem Hauptkörper 28 der Profilleiste 20 stegförmig abragendes, lippenförmiges Rastelement 68 auf, mit einem Oberflächenabschnitt 104, der denjenigen Oberflächenabschnitt der Profilleiste 20 bildet, der zu der Unterkante 30 der Berandung 14 der Windschutzscheibe 12 maximal beabstandet ist. Dieser maximale Abstand ist in Fig. 7 mit dem Bezugszeichen 105 bezeichnet, Der Abstand 105 wird in einer zu der Außenseite 36 der Windschutzscheibe 12 parallelen Richtung gemessen, und zwar zwischen einer ersten Bezugsebene 107 auf Höhe der Unterkante 30 der Windschutzscheibe 12 und einer zu der ersten Bezugsebene 107 parallelen Bezugsebene 109.

Zum Schutz des Rastelements 68 weist die Vormontageeinheit 100 ein Schutzelement 106 auf, das mit der Baugruppe 102 verbunden ist. Das Schutzelement 106 weist eine der Windschutzscheibe 12 abgewandte Aufstandsfläche 108 auf. Die Aufstandsfläche 108 weist zu der Unterkante 30 der Windschutzscheibe 12 einen größeren Abstand auf als der Oberflächenabschnitt 104 der Profilleiste 20. Auf diese Weise können die in Figuren 7 bis 9 dargestellten Vormontageeinheiten 100 abweichend von der zeichnerischen Darstellung während des Transports und der Lagerung vertikal angeordnet werden und mit der Aufstandsfläche 108 auf einer horizontalen Transport- oder Lagefläche abgestellt werden.

Für die Ausgestaltung des Schutzelements 106 ist es beispielsweise möglich, ein U-Profil mit Schenkeln 110, 112 zu verwenden, welche die Profilleiste 20 und eine untere Berandung 14 der Windschutzscheibe 12 umschließen (vergleiche Figur 7). Ein solches Schutzelement 106 ist beispielsweise reibschlüssig auf die Baugruppe 102 aufgesteckt.

Es ist auch möglich, das Schutzelement 108 einstückig mit der Profilleiste 20 auszubilden und das Schutzelement 106 und die Profilleiste 20 über eine Solltrennstelle 114 miteinander zu verbinden (vergleiche Fig. 8). Während des Transports der Baugruppe 102 gemäß Figur 8 kann die Baugruppe hochkant/vertikal angeordnet werden, sodass die Aufstandsfläche 108 des Schutzelements 106 das Rastelement 68 vor einer Beschädigung schützt. Vor der Montage eines Abdeckbauteils wird das Schutzelement unter Zerstörung der Solltrennstelle entfernt.

Eine weitere Besonderheit der Ausgestaltung der Vormontageeinheit 100 gemäß Figur 8 besteht darin, dass das Schutzelement 106 eine Anlagefläche 116 aufweist, die bei Montage der Vormontageeinheit 100 an einem Kraftfahrzeug in Anlage mit einer Gegenfläche 118 des Zusatzelements 48 gebracht wird, sodass ein Abstand zwischen dem ersten Befestigungsabschnitt 52 des Zusatzelements 48 und dem zweiten Befestigungsabschnitt 66 der Profilleiste (in Form des Rastelements 68) eingestellt werden kann, bevor das Schutzelement 106 von der Profilleiste 20 abgetrennt wird.

Bei der in Figur 8 dargestellten Ausführungsform ist die Anlagefläche 116 des Schutzelements 106 durch die Aufstandsfläche 108 gebildet, die somit eine Doppelfunktion hat.

Bei der in Figur 8 dargestellten Ausführungsform ist die Gegenfläche 118 des Zusatzelements durch die Reibfläche 54 des ersten Befestigungsabschnitts 52 des Zusatzelements 48 gebildet, sodass die Reibfläche 54 ebenfalls eine Doppelfunktion hat.

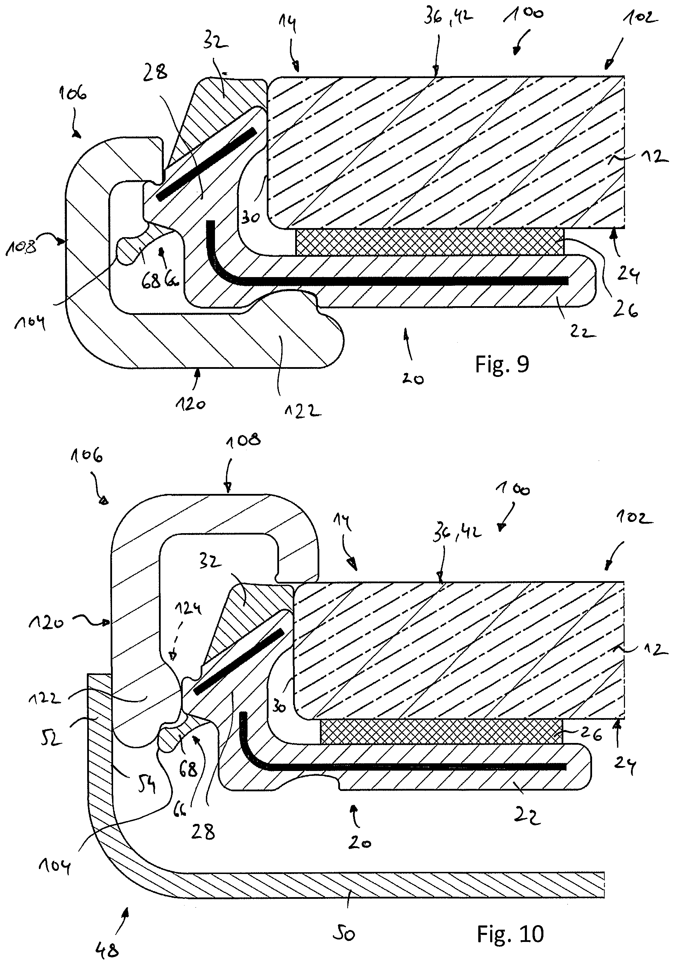

Die Figuren 9 und 10 zeigen ein Schutzelement 106, welches relativ zu der Baugruppe 102 in verschiedenen Lagen ausrichtbar ist. In einer ersten Lage des Schutzelements 106 bildet dieses einen Transportschutz zum Schutz des Rastelements 68, vergleiche Figur 9. In dieser Transportlage ist das Schutzelement 106 mit dem Hauptkörper 28 und dem Verbindungsabschnitt 22 der Profilleiste 20 verclipst und umfängt das Rastelement 68. In diesem Zustand kann eine zu der Unterkante 30 der Windschutzscheibe 12 parallele Aufstandsfläche 108 als Aufstandsfläche verwendet werden; eine hierzu rechtwinklig angeordnete Zusatzfläche 120 bildet während eines Transports und vertikaler Anordnung der Windschutzscheibe 12 eine seitliche Schutzfläche.

Das Schutzelement 106 kann aus seiner Transportlage von der Baugruppe 102 entfernt und als Abstandslehre verwendet werden, indem ein die Zusatzfläche 120 tragender Zusatzabschnitt 122 des Schutzelements 106 verwendet wird. Der Zusatzabschnitt 122 wird in einen Zwischenraum 124 eingebracht, der zwischen den Befestigungsabschnitten 52 und 66 ausgebildet ist, vergleiche Figur 10. Unter Anlage des Zusatzabschnitts an den beiden Befestigungsabschnitten 52 und 66 wird ein Abstand zwischen den ersten und zweiten Befestigungsabschnitten 52 und 66 des Zusatzbauteils 48 einerseits und der Profilleiste 20 andererseits definiert.

Nach der Relativpositionierung der Befestigungsabschnitte 52 und 66 und Entfernung des Schutzelements 106 kann das Abdeckbauteil 34 montiert werden, und zwar durch Einführung des Halteabschnitts 46 in den zwischen den Befestigungsabschnitten 52 und 66 gebildeten Zwischenraum 124 (vergleiche Figuren 1 bis 6). Eine Fügerichtung 80 (vergleiche Figur 1, gilt für die übrigen Ausführungsformen entsprechend) verläuft dabei senkrecht oder geneigt, nicht aber parallel, zu einer Ebene, in der sich die Außenfläche 42 des Kraftfahrzeugs erstreckt.

Die vorstehenden Ausführungen zur Montage des Abdeckbauteils 34 gelten für die Ausführungsformen gemäß Figuren 11 bis 13 entsprechend. Bei diesen Ausführungsformen ist es möglich, während des Transports eine Vormontageeinheit 100, die eine Baugruppe 102 mit einer Windschutzscheibe 12 und einer daran befestigten Profilleiste 20 umfasst, auf ein zusätzliches Schutzelement 106 (vergleiche Figuren 7 bis 10) zu verzichten. Bei den Profilleisten 20 gemäß Figuren 11 bis 13 ist der zweite Befestigungsabschnitt 66 in Form eines im Vergleich zu einem lippenförmigen Rastelement 66 (vergleiche Figuren 7 bis 10) robusteren Rastbereich 70 ausgebildet. Auf diese Weise ist eine der Unterkante 30 der Windschutzscheibe 12 abgewandte Stirnfläche 82 des Hauptkörpers 28 als Aufstandsfläche für einen vertikalen Transport der Baugruppe 102 verwendbar.

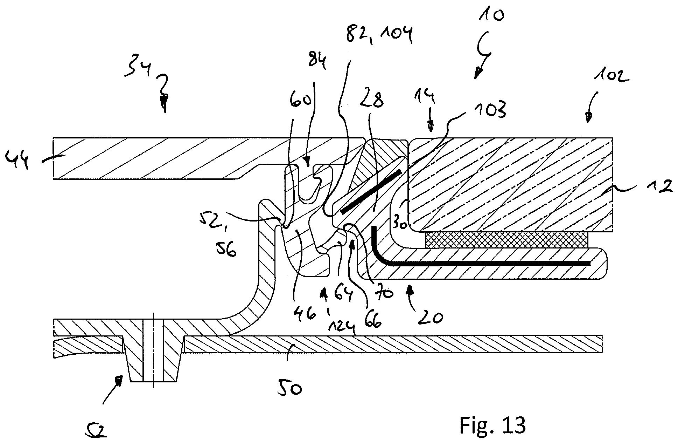

Die Stirnfläche 82 bildet denjenigen Oberflächenabschnitt 104 des Hauptkörpers 28, der einen zu einer Rückseite 103 des Hauptkörpers maximalen Abstand aufweist (vergleiche Fig. 13). Die Rückseite 103 dient zur Anlage an der Unterkante 30 der Windschutzscheibe 12. Der Rastbereich 70 ist von der Stirnfläche 82 ausgehend in Richtung auf die Rückseite 103 des Hauptkörpers bzw. in Richtung auf die Unterkante 30 der Windschutzscheibe 12 rückversetzt.

Das Rastelement 64 der Ausführungsformen gemäß Figuren 11 bis 13 ist an dem Halteabschnitt 46 des Abdeckbauteils 34 angeordnet. Dabei kann der Halteabschnitt 46 einstückig mit dem Abdeckabschnitt 44 ausgebildet sein (vergleiche Figuren 11 und 12) oder aber mittels einer Rastverbindung 84 mit dem Abdeckabschnitt 44 verbunden sein (vergleiche Figur 13) .

## Patentansprüche

1. Kraftfahrzeuganordnung (10), umfassend eine Windschutzscheibe (12), eine an einer unteren Berandung (14) der Windschutzscheibe (12) befestigte Profilleiste (20) und ein an die Windschutzscheibe (12) angrenzendes Abdeckbauteil (34), wobei die Profilleiste (20) oder das Abdeckbauteil (34) einen zwischen Windschutzscheibe (12) und Abdeckbauteil (34) wirksamen Dichtungsabschnitt (32) aufweist, dessen Außenseite (38) gemeinsam mit einer Außenseite (36) der Windschutzscheibe (12) und einer Außenseite (40) des Abdeckbauteils (34) einen Teil einer kontinuierlichen Außenfläche (42) des Kraftfahrzeugs bildet, wobei ein Zusatzbauteil (48) vorgesehen ist, das Teil einer Kraftfahrzeugkarosserie (50) ist oder mit dieser verbunden ist, wobei das Zusatzbauteil (48) einen ersten Befestigungsabschnitt (52) und die Profilleiste (20) einen zweiten Befestigungsabschnitt (66) aufweist, wobei das Abdeckbauteil (34) einen Halteabschnitt (46) aufweist, der zwischen den Befestigungsabschnitten (52, 66) befestigt ist, **dadurch gekennzeichnet, dass** die beiden Befestigungsabschnitte (52, 66) einen Zwischenraum (124) begrenzen, in welchen hinein der Halteabschnitt (46) des Abdeckbauteils (34) in einer Fügerichtung (80) eingeführt ist, wobei die Befestigungsabschnitte (52, 66) und der Halteabschnitt (46) zu der Außenfläche (42) geneigt oder senkrecht orientiert sind, derart, dass die Fügerichtung (80) zum Fügen des Halteabschnitts (46) und der Befestigungsabschnitte (52, 66) zu der Außenfläche (42) geneigt oder senkrecht orientiert ist.

2. Kraftfahrzeuganordnung (10) nach Anspruch 1, **dadurch gekennzeichnet, dass** der Halteabschnitt (46) stegförmig ausgebildet ist.

3. Kraftfahrzeuganordnung (10) nach einem der voranstehenden Ansprüche, **dadurch gekennzeichnet, dass** die Befestigungsabschnitte (52, 66) und der Halteabschnitt (46) reibschlüssig und/oder formschlüssig zusammenwirken.

4. Kraftfahrzeuganordnung (10) nach einem der voranstehenden Ansprüche, **dadurch gekennzeichnet, dass** zumindest einer der Befestigungsabschnitte (52, 66) und der Halteabschnitt (46) Rastbereiche (60, 62, 70) oder Rastelemente (56, 64, 68) aufweisen, mittels welchen der Halteabschnitt (46) und der zumindest eine Befestigungsabschnitt (52, 66) miteinander verrastet sind.

5. Kraftfahrzeuganordnung (10) nach einem der voranstehenden Ansprüche, **dadurch gekennzeichnet, dass** die Profilleiste (20) und/oder das Zusatzbauteil (48) mindestens einen Stützabschnitt (72) aufweist oder aufweisen, mittels welchem oder welchen die Profilleiste (20) und das Zusatzbauteil (48) in einer zu der Außenfläche (42) parallelen Richtung relativ zueinander abgestützt sind.

6. Kraftfahrzeuganordnung (10) nach einem der voranstehenden Ansprüche, **dadurch gekennzeichnet, dass** die Profilleiste (20) mindestens einen Auflageabschnitt (74) zur Auflage auf der Kraftfahrzeugkarosserie (50) und/oder auf dem Zusatzbauteil (48) aufweist.

7. Kraftfahrzeuganordnung (10) nach einem der voranstehenden Ansprüche, **dadurch gekennzeichnet, dass** das Zusatzbauteil (48) eine Traverse der Kraftfahrzeugkarosserie (50) ist, oder dass das Zusatzbauteil (48) an einer Traverse der Kraftfahrzeugkarosserie (50) befestigt ist.

8. Kraftfahrzeuganordnung (10) nach einem der voranstehenden Ansprüche, **dadurch gekennzeichnet, dass** die Profilleiste (20) einen Hauptkörper (28) aufweist,
- an dem ein stegförmig abragendes, lippenförmiges Rastelement (68) angeordnet ist, das einen zu einer Rückseite (103) des Hauptkörpers (28), der zur Anlage an einer Unterkante (30) der unteren Berandung (14) der Windschutzscheibe (12) dient, maximal beabstandeten Oberflächenabschnitt (104) der Profilleiste (20) bildet, oder
- der insbesondere massiv ausgebildet ist und eine Stirnfläche (82) aufweist, die einen zu der Rückseite (103) des Hauptkörpers (28) maximal beabstandeten Oberflächenabschnitt (104) der Profilleiste bildet und einen von der Stirnfläche (82) ausgehend in Richtung auf die Rückseite rückversetzten Befestigungsabschnitt aufweist, der den zweiten Befestigungsabschnitt (66) bildet.

9. Kraftfahrzeuganordnung (10) nach Anspruch 8, **dadurch gekennzeichnet, dass** der zweite Befestigungsabschnitt (66) in Form eines Rastbereichs (70) ausgebildet ist.

10. Verfahren zur Montage einer Kraftfahrzeuganordnung (10) nach einem der voranstehenden Ansprüche, **dadurch gekennzeichnet, dass** zunächst der erste Befestigungsabschnitt (52) des Zusatzbauteils (48) und der zweite Befestigungsabschnitt (66) der Profilleiste (20) innerhalb einer sich parallel zu der Außenfläche (42) erstreckenden Ebene relativ zueinander positioniert werden, und dass dann der Halteabschnitt (46) des Abdeckbauteils (34) in der zu der Außenfläche (42) geneigten oder senkrechten Fügerichtung (80) zwischen die Befestigungsabschnitte (52, 66) eingeführt und befestigt wird.

11. Vormontageeinheit (100) zur Verwendung bei einer Kraftfahrzeuganordnung (10) nach Anspruch 8 oder 9, umfassend eine Baugruppe (102) mit einer Windschutzscheibe (12) und mit einer an einer unteren Berandung (14) der Windschutzscheibe (12) befestigten Profilleiste (20) nach Anspruch 8 oder 9, **dadurch gekennzeichnet, dass** die Profilleiste (20) und/oder die Windschutzscheibe (12) mit einem Schutzelement (106) lösbar verbunden ist oder sind, das in seinem mit der Profilleiste (20) und/oder der Windschutzscheibe (12) verbundenen Zustand eine der unteren Berandung (14) der Windschutzscheibe (12) abgewandte Aufstandsfläche (108) aufweist, die einen größeren Abstand zu der unteren Berandung (14) der Windschutzscheibe (12) aufweist als der zu der Unterkante (30) der unteren Berandung (14) der Windschutzscheibe (12) maximal beabstandete Oberflächenabschnitt (104) der Profilleiste (20).

12. Vormontageeinheit (100) nach Anspruch 11, **dadurch gekennzeichnet, dass** die lösbare Verbindung zwischen dem Schutzelement (106) einerseits und der Profilleiste (20) und/oder der Windschutzscheibe (12) andererseits durch eine Rastverbindung oder durch eine zwischen dem Schutzelement (106) und der Profilleiste (20) vorgesehene Solltrennstelle (114) gebildet ist.

13. Verfahren zur Montage einer Kraftfahrzeuganordnung (10) nach einem der Ansprüche 1 bis 9 unter Verwendung einer Vormontageeinheit (100) nach Anspruch 11 oder 12, **dadurch gekennzeichnet, dass** zur Positionierung der Baugruppe (102) relativ zu dem Zusatzelement (48) eine Anlagefläche (116) des Schutzelements (106) in Anlage mit einer Gegenfläche (118) des Zusatzelements (48) gebracht wird, das Schutzelement (106) von der Baugruppe (102) entfernt wird und das Abdeckbauteil (34) montiert wird.

14. Verfahren nach Anspruch 13, **dadurch gekennzeichnet, dass** die Anlagefläche (116) des Schutzelements (106) durch dessen Aufstandsfläche (108) oder durch eine von der Aufstandsfläche (108) separate Zusatzfläche (120) des Schutzelements (106) gebildet ist.

15. Verfahren nach Anspruch 13 oder 14, **dadurch gekennzeichnet, dass** die Gegenfläche (118) des Zusatzelements (48) durch dessen Befestigungsabschnitt (52) oder durch eine von dem Befestigungsabschnitt (52) separate Zusatzfläche des Zusatzelements (48) gebildet ist.

## Claims

1. Motor vehicle arrangement (10) comprising a windshield (12), a profile strip (20) attached to a lower boundary (14) of the windshield (12) and a cover component (34) adjoining the windshield (12), wherein the profile strip (20) or the cover component (34) has a sealing section (32) operative between the windshield (12) and the cover component (34), an outside (38) of the sealing section together with an outside (36) of the windshield (12) and an outside (40) of the cover component (34) forming a part of a continuous outer surface (42) of the motor vehicle, wherein an additional component (48) is provided, which is part of, or connected to, a motor vehicle body (50), wherein the additional component (48) has a first fastening section (52) and the profile strip (20) has a second fastening section (66), wherein the cover component (34) has a holding section (46) which is fastened between the fastening sections (52, 66), **characterized in that** the two fastening sections (52, 66) delimit a gap (124), into which gap the holding section (46) of the cover member (34) is inserted in a joining direction (80), wherein the fastening sections (52, 66) and the holding section (46) are inclined or perpendicularly oriented to the outer surface (42) such that the joining direction (80) for joining the holding section (46) and the fastening sections (52, 66) is inclined or perpendicularly oriented to the outer surface (42).

2. Motor vehicle arrangement (10) according to claim 1, **characterized in that** the holding section (46) is web-shaped.

3. Motor vehicle arrangement (10) according to one of the preceding claims, **characterized in that** the fastening sections (52, 66) and the holding section (46) cooperate frictionally and/or positively.

4. Motor vehicle arrangement (10) according to one of the preceding claims, **characterized in that** at least one of the fastening sections (52, 66) and the holding section (46) have latching regions (60, 62, 70) or latching elements (56, 64, 68) by means of which the holding section (46) and the at least one fastening section (52, 66) are latched to one another.

5. Motor vehicle arrangement (10) according to one of the preceding claims, **characterized in that** the profile strip (20) and/or the additional component (48) has or have at least one supporting section (72) by means of which the profile strip (20) and the additional component (48) are supported relative to one another in a direction parallel to the outer surface (42).

6. Motor vehicle arrangement (10) according to one of the preceding claims, **characterized in that** the profile strip (20) has at least one bearing section (74) for bearing on the motor vehicle body (50) and/or on the additional component (48).

7. Motor vehicle arrangement (10) according to one of the preceding claims, **characterized in that** the additional component (48) is a crosspiece of the motor vehicle body (50), or **in that** the additional component (48) is attached to a crosspiece of the motor vehicle body (50).

8. Motor vehicle arrangement (10) according to one of the preceding claims, **characterized in that** the profile strip (20) has a main body (28),
- the main body (28) being provided with lip-shaped latching element (68) projecting in a web-shaped manner and forming a surface section (104) of the profile strip (20), the surface section (104) being at a maximum distance from a rear side (103) of the main body (28), which main body (28) serves to bear against a bottom edge (30) of the lower boundary (14) of the windshield (12), or
- the main body (28) being in particular of solid construction and having an end face (82) forming a surface section (104) of the profile strip (20), the surface section (104) being at a maximum distance from the rear side (103) of the main body (28) and having a fastening section which is offset backwards from the end face (82) in a direction towards the rear side and which forms the second fastening section (66).

9. Motor vehicle arrangement (10) according to claim 8, **characterized in that** the second fastening section (66) is in the form of a latching region (70).

10. Method for assembling a motor vehicle assembly (10) according to one of the preceding claims, **characterized in that** at first the first fastening section (52) of the additional component (48) and the second fastening section (66) of the profile strip (20) are positioned relative to one another within a plane extending parallel to the outer surface (42), and **in that** then the holding section (46) of the cover component (34) is inserted, in the joining direction (80) which is inclined or perpendicular to the outer surface (42), between the fastening sections (52, 66), and fastened between the fastening sections (52, 66).

11. Preassembly unit (100) for use in a motor vehicle assembly (10) according to claim 8 or 9, comprising a subassembly (102) having a windshield (12) and a profile strip (20) according to claim 8 or 9 attached to a lower boundary (14) of the windshield (12), **characterized in that** the profile strip (20) and/or the windshield (12) is or are detachably connected to a protective element (106) which, when it is connected to the profile strip (20) and/or the windshield (12), has a contact surface (108) which faces away from the lower boundary (14) of the windshield (12) and which is at a greater distance from the lower boundary (14) of the windshield (12) than the surface section (104) of the profile strip (20) which surface section (104) is at the maximum distance from the lower edge (30) of the lower boundary (14) of the windshield (12).

12. Preassembly unit (100) according to claim 11, **characterized in that** the detachable connection between the protective element (106) on the one hand and the profile strip (20) and/or the windshield (12) on the other hand is formed by a latching connection or by a predetermined breaking point (114) provided between the protective element (106) and the profile strip (20).

13. Method for assembling a motor vehicle assembly (10) according to one of claims 1 to 9 using a pre-assembly unit (100) according to claim 11 or 12, **characterized in that**, in order to position the subassembly (102) relative to the additional component (48), a bearing surface (116) of the protective element (106) is brought into contact with an opposing surface (118) of the additional component (48), the protective element (106) is removed from the subassembly (102) and the cover component (34) is mounted.

14. Method according to claim 13, **characterized in that** the bearing surface (116) of the protective element (106) is formed by its contact surface (108) or by an additional surface (120) of the protective element (106), the additional surface (120) being separate from the contact surface (108).

15. Method according to claim 13 or 14, **characterized in that** the opposing surface (118) of the additional component (48) is formed by its fastening section (52) or by an additional surface of the additional element (48), the additional surface being separate from the fastening section (52).

## Revendications

1. Ensemble de véhicule automobile (10) comprenant un pare-brise (12), une baguette profilée (20) fixée à une bordure inférieure (14) du pare-brise (12) et un composant de recouvrement (34) adjacent au pare-brise (12), la baguette profilée (10) ou le composant de recouvrement (34) présentant une portion d'étanchéité (32) qui est efficace entre le pare-brise (12) et le composant de recouvrement (34) et dont la face extérieure (38) forme conjointement avec une face extérieure (36) du pare-brise (12) et une face extérieure (40) du composant de recouvrement (34) une partie d'une surface extérieure continue (42) du véhicule automobile, dans lequel un composant supplémentaire (48) est prévu qui fait partie d'une carrosserie de véhicule automobile (50) ou est relié à celle-ci, dans lequel ledit composant supplémentaire (48) présente une première section de fixation (52) et la baguette profilée (20) présente une deuxième section de fixation (66), dans lequel le composant de recouvrement (34) présente une section de maintien (46) qui est fixée entre les sections de fixation (52, 66), **caractérisé par le fait que** les deux sections de fixation (52, 66) délimitent un espace intermédiaire (124) dans lequel la section de maintien (46) du composant de recouvrement (34) est insérée dans une direction de jonction (80), dans lequel les sections de fixation (52, 66) et la section de maintien (46) sont inclinées ou orientées perpendiculairement par rapport à la surface extérieure (42) de telle sorte que la direction de jonction (80) pour joindre la section de maintien (46) et les sections de fixation (52, 66) est inclinée ou orientée perpendiculairement par rapport à la surface extérieure (42).

2. Ensemble de véhicule automobile (10) selon la revendication 1, **caractérisé par le fait que** la section de maintien (46) est réalisée en forme d'âme.

3. Ensemble de véhicule automobile (10) selon l'une quelconque des revendications précédentes, **caractérisé par le fait que** les sections de fixation (52, 66) et la section de maintien (46) coopèrent les unes avec les autres par friction et/ou à engagement positif.

4. Ensemble de véhicule automobile (10) selon l'une quelconque des revendications précédentes, **caractérisé par le fait que** l'une au moins des sections de fixation (52, 66) et la section de maintien (46) comprennent des zones d'encliquetage (60, 62, 70) ou des éléments d'encliquetage (56, 64, 68) au moyen desquels la section de maintien (46) et ladite au moins une section de fixation (52, 66) sont encliquetées entre elles.

5. Ensemble de véhicule automobile (10) selon l'une quelconque des revendications précédentes, **caractérisé par le fait que** la baguette profilée (20) et/ou le composant supplémentaire (48) présente ou présentent au moins une section de support (72) au moyen de laquelle ou desquelles la baguette profilée (20) et le composant supplémentaire (48) sont appuyés l'un(e) par rapport à l'autre dans une direction parallèle à la surface extérieure (42).

6. Ensemble de véhicule automobile (10) selon l'une quelconque des revendications précédentes, **caractérisé par le fait que** la baguette profilée (20) présente au moins une section d'appui (74) destinée à reposer sur la carrosserie de véhicule automobile (50) et/ou sur le composant supplémentaire (48).

7. Ensemble de véhicule automobile (10) selon l'une quelconque des revendications précédentes, **caractérisé par le fait que** le composant supplémentaire (48) est une traverse de la carrosserie de véhicule automobile (50), ou que le composant supplémentaire (48) est fixé à une traverse de la carrosserie de véhicule automobile (50).

8. Ensemble de véhicule automobile (10) selon l'une quelconque des revendications précédentes, **caractérisé par le fait que** la baguette profilée (20) comprend un corps principal (28)
- sur lequel est disposé un élément d'encliquetage (68) en forme de lèvre qui fait saillie en forme d'âme et qui forme une section de surface (104) de la baguette profilée (20), espacée au maximum d'une face arrière (103) du corps principal (28) qui sert d'appui sur un bord inférieur (30) de la bordure inférieure (14) du pare-brise (12), ou
- qui est réalisé en particulier de manière massive et présente une face frontale (82) laquelle forme une section de surface (104) de la baguette profilée, espacée au maximum de la face arrière (103) du corps principal (28), et comprend une section de fixation qui est en retrait en direction de la face arrière (82), à partir de la face frontale (82), et qui forme ladite deuxième section de fixation (66).

9. Ensemble de véhicule automobile (10) selon la revendication 8, **caractérisé par le fait que** la deuxième section de fixation (66) est réalisée sous forme d'une zone d'encliquetage (70).

10. Procédé de montage d'un ensemble de véhicule automobile (10) selon l'une quelconque des revendications précédentes, **caractérisé par le fait que** d'abord la première section de fixation (52) du composant supplémentaire (48) et la deuxième section de fixation (66) de la baguette profilée (20) sont positionnées l'une par rapport à l'autre dans un plan s'étendant parallèlement à la surface extérieure (42), et que, ensuite, la section de maintien (46) du composant de recouvrement (34) est introduite dans la direction de jonction (42) inclinée ou perpendiculaire par rapport à la surface extérieure (42), entre les sections de fixation (52, 66) et est fixée.

11. Unité de pré-montage (100) destinée à être utilisée dans un ensemble de véhicule automobile (10) selon la revendication 8 ou 9, comprenant un ensemble (102) ayant un pare-brise (12) et ayant une baguette profilée (20) selon la revendication 8 ou 9 fixée à une bordure inférieure (14) du pare-brise (12), **caractérisée par le fait que** la baguette profilée (20) et/ou le pare-brise (12) est ou sont relié(e)(s) de manière amovible à un élément de protection (106) qui, lorsqu'il est relié à la baguette profilée (20) et/ou au pare-brise (12), présente une surface de contact (108) qui montre dans la direction opposée à la bordure inférieure (14) du pare-brise (12) et qui présente une plus grande distance de la bordure inférieure (14) du pare-brise (12) que la section de surface (104) de la baguette profilée (20), qui est espacée au maximum du bord inférieur (30) de la bordure inférieure (14) du pare-brise (12).

12. Unité de pré-montage (100) selon la revendication 11, **caractérisée par le fait que** la liaison amovible entre l'élément de protection (106) d'une part et la baguette profilée (20) et/ou le pare-brise (12) d'autre part est réalisée par une liaison à encliquetage ou par un point destiné à la rupture qui est prévu entre l'élément de protection (106) et la baguette profilée (20).

13. Procédé de montage d'un ensemble de véhicule automobile (10) selon l'une quelconque des revendications 1 à 9, en utilisant une unité de pré-montage (100) selon la revendication 11 ou 12, **caractérisé par le fait que**, pour positionner ledit ensemble (102) par rapport à l'élément supplémentaire (48), une surface d'appui (116) de l'élément de protection (106) est mise en appui avec une contre-surface (118) de l'élément supplémentaire (48), l'élément de protection (106) est détaché de l'ensemble (102) et le composant de recouvrement (34) est monté.

14. Procédé selon la revendication 13, **caractérisé par le fait que** la surface d'appui (116) de l'élément de protection (106) est formée par la surface de contact (108) de celui-ci ou par une surface supplémentaire (120) de l'élément de protection (106), qui est séparée de la surface de contact (108).

15. Procédé selon la revendication 13 ou 14, **caractérisé par le fait que** la contre-surface (118) de l'élément supplémentaire (48) est formée par sa section de fixation (52) ou par une surface supplémentaire de l'élément supplémentaire (48), qui est séparée de la section de fixation (52).
